Europäisches Patentamt

European Patent Office

Office européen des brevets

(11) Publication number: **0 368 302 B1**

# EUROPEAN PATENT SPECIFICATION

(45) Date of publication of patent specification: **17.05.95**

(51) Int. Cl.⁶: **B29C 44/00**, B29C 47/00, //B29K105/04,B29K23/00, B29L23/00

(21) Application number: **89120745.8**

(22) Date of filing: **09.11.89**

(54) **Process and apparatus for the production of foamed polyolefin sheets.**

(30) Priority: **11.11.88 JP 285289/88**

(43) Date of publication of application:
**16.05.90 Bulletin 90/20**

(45) Publication of the grant of the patent:
**17.05.95 Bulletin 95/20**

(84) Designated Contracting States:
**DE FR GB**

(56) References cited:
EP-A- 0 231 657    FR-A- 2 375 021
GB-A- 1 102 239    GB-A- 1 400 494
US-A- 3 194 864    US-A- 3 311 681
US-A- 3 661 482    US-A- 3 822 331

PATENT ABSTRACT OF JAPAN, vol. 5, no.
135, (M-85)[807], 27th August 1981;& JP-A-56
69 132 (MITSUI TOATSU KAGAKI K.K.)
10-16-1981

(73) Proprietor: **Japan Styrene Paper Corporation**
**1-1, 2-chome, Uchisaiwai-cho**
**Chiyoda-ku**
**Tokyo (JP)**

(72) Inventor: **Iwano, Shoji**
**1219, Honjyou**
**Nishikata-mura**
**Kamitsuga-gun**
**Tochigi-ken (JP)**
Inventor: **Ishihara, Yoshihisa A-201,**
**Nyusutahausu**
**4-16-2 Kamitomatsuri**
**Utsunomiya-shi**
**Tochigi-ken (JP)**
Inventor: **Wakabayashi, Kouichi**
**2-3-30, Saiwai-cho**
**Kanuma-shi**
**Tochigi-ken (JP)**

(74) Representative: **Müller-Gerbes, Margot,**
**Dipl.-Ing.**
**Friedrich-Breuer-Strasse 112**
**D-53225 Bonn (DE)**

## Description

BACKGROUND OF THE INVENTION

1) Field of the Invention:

This invention relates to a process for producing a foamed polyolefin sheet according to the preamble of claim 1 and also to an apparatus according to the preamble of claim 3.

2) Description of the Related Art:

Conventionally, foamed polyolefin sheets have each been produced by extruding a polyolefin resin, which contains a blowing agent, into a low-pressure zone through an annular die provided at an end of an extruder to form a foamed tubular body, bringing the foamed tubular body into contact with a peripheral surface of a cylindrical cooling device to cool the foamed tubular body and then slitting the thus-cooled foamed tubular body in the direction of extrusion to open same. In this conventional process, it is however difficult to increase the ratio (blow ratio) of the diameter of the annular die to the diameter of the cylindrical cooling device because the extensibility of the extruded foamed tubular body drops abruptly. When the blow ratio is small, the foamed tubular body cannot be extended sufficiently. As a result, corrugations occur in the resulting foamed sheet, resulting in problems such that these corrugations deteriorate the external appearance of the product, lower the accuracy upon cutting the sheet and also reduce the accuracy of bonding namely, form portions having good strength and those having poor strength when employed for lamination. It is preferred that a blowing agent employed for the production of such foamed sheets is inexpensive. Economical butane is suitable from this standpoint. The use of a blowing agent having a high foaming speed, like butane, is accompanied by the problem that the occurance of corrugations becomes particularly remarkable.

The GB-A-1400494 discloses a process and apparatus therefore for producing a foamed polyolefin sheet by extruding a molten polyolefin resin, which contains a blowing agent, into a low-pressure zone through an annular die provided at an end of an extruder to form a foamed tubular body, bringing the foamed tubular body into contact with a first cylindrical cooling device comprising an annular passageway to cool the foamed tubular body on both sides and then passing the foamed tubular body over the surface of a second core unit for supporting and cooling the foamed tubular body and thereafter slitting the thus-cooled foamed tubular body in the direction of extrusion to open same. The foamed sheet thus obtained has surfaces which are foamed only to a limited extent or are substantially unfoamed, though its intermediate layer is highly foamed, to provide an open-all structure by stretching in the thickness direction of the foamed sheet.

The GB-A-1102239 discloses a process and apparatus for production of a foamed sheet of alkenyl aromatic resins (styrene resins), whereby the foamable alkenyl aromatic resin composition is extruded in a zone of reduced pressure and the heat plastified cellular tube is stretched biaxially over a mandrel thereby maintaining a flow of gas between the foamed tube and the mandred in the space between the die and the mandrel thereby cooling the foamed tube below its thermoplastics temperature and splitting the foamed tube longitudinally. Such process does not solve the problems of producting foamed polyolefin sheets having a high foaming speed and having less corrugations.

Further in the fabrication of thin film for packaging uses which has shrink-back capabilities it is disclosed to expand the extruded tube of unfoamable thermoplastic resin, like PVC, by supply of air pressure into the tube and passing the expanded tube over a plurality of spaced mandrels, certain one of said mandrels having progressively increasing diameters to effect transverse controlled shrink-back of the expanded tube, and said mandrels defining chambers between the inner wall of the tube and the mandrels to facilitate the stretching of the tube by pressured air and said mandrels defining annular reservoirs between their peripheral surface and the tube for conveying heat liquid to said annular reservoirs to heat said tube adjacent thereto and thereafter cooling said tube by supplying a cooling liquid. Such a production process for thin films with alternating stretching, heating, cooling steps is not applicable for the production of foamed tubes.

The EP-A-0231657 discloses a process and apparatus for extruding a thin-walled tube of thermoplastics material, not for foamed tubes or foamed sheets. The extruded tube is pulled over a sizing disk, comprising cooling means and over a stabilizing disk, having no cooling means and being spaced apart from the sizing disk by fixing means, i.e. supporting rods. For expansion cooling or heating a first pressurized air is supplied into the tube in the space between the die and the sizing disk, which air is allowed to exit the space by channels in the die. Further a second pressurized air is supplied into the stabilization zone between sizing disk and stabilizing disk to prevent collapse of the thin tube. This process for production of thin walled tubes of compact thermoplastics synthetic resin by extrusion and expansion and stretching of the extruded tube including one cooling-sizing disk does not provide sufficient assistance and is not applicable with success in the production of foamed tubular bodies of thermoplastic synthetic resin.

It has therefore been desired to develop a process which can provide foamed polyolefin sheets, which contain less corrugations, by using an inexpensive blowing agent such as butane, having a high foaming speed. The present invention starts on the base of the prior art as disclosed in GB-A-1400494.

## SUMMARY OF THE INVENTION

The present invention has been completed to solve the above-described drawbacks of the conventional art. It is therefore an object of the present invention to provide a process for the production of a foamed polyolefin sheet containing much less corrugations compared to the conventional processes and also to provide an apparatus therefore.

In one aspect of this invention, there is thus provided a process for producing a foamed polyolefin sheet by extruding a molten polyolefin resin, which contains a blowing agent, into a low-pressure zone through an annular die provided at an end of an extruder to form a foamed tubular body, passing the foamed tubular body along the peripheral surface of a cylindrical cooling device to cool the foamed tubular body and then slitting the thus-cooled foamed tubular body in the direction of extrusion to open the foamed body, which process comprises: bringing the foamed tubular body in contact with the peripheral surfaces of at least two sections of a cylindrical cooling device received by dividing said cylindrical cooling device and increasing the internal pressure of the foamed tubular body to apply tension to the foamed tubular body at the inner wall by feeding air through air outlets of an air feed pipe between the die and the most upstream section of the cylindrical cooling device and also between at least two adjacent sections of the cylindrical cooling device and thereby cooling the foamed tubular body by the air thus fed.

In a preferred embodiment, 10-30 parts by weight of butane may be used as the blowing agent per 100 parts by weight of low-density polyethylene to provide a foamed polyethylene sheet having an expansion ratio of 20-60 times.

In another aspect of this invention, there is also provided an apparatus for the production of a foamed polyolefin sheet, comprising an extruder with an annular die at an end of the extruder and a cylindrical cooling device for cooling a tubular foamed body formed through the annular die and passing the foamed tubular body along the peripheral surface of the cooling device, and means for slitting the cooled tubular foamed body in the direction of extrusion to open the same, which comprises at least two sections of a cylindrical cooling device received by dividing said cylindrical cooling device and an air feed pipe having air outlets arranged between the annular die and the most upstream section of the cylindrical cooling device and air outlets between at least two adjacent sections of the cylindrical cooling device, for feeding air through the air outlets thereby increasing the internal pressure of the thus-cooled foamed tubular body and applying tension to the foamed tubular body at inner wall thereof and cooling the foamed tubular body.

In a preferred embodiment, at least one of said at least two, section of the cylindrial cooling device may be movable for adjustment of the length ML, the length from the upstream end of the most upstream section of the cylindrical cooling device to the downstream end of the most downstream section of the cylindrical cooling device.

In another preferred embodiment of the downstream section of the cylindrical cooling device is designed to be slidably movable on the air feed pipe (50) by drive means or the upstream section of the cylindrical cooling device is arranged movably and the downstream section is fixed.

In another preferred embodiment, the die and the cylindrical cooling device may satisfy the following equations:

DD/MD = 0.1-1.0 and
MD/ML = 0.5-0.02

wherein DD is a ring diameter of the annular die, MD the maximum diameter of the cylindrical cooling device and ML the length from the upstream end of the most upstream section of the cylindrical cooling device to the downstream end of the most downstream section of the cylindrical cooling device, all expressed in terms of mm.

In a further preferred embodiment, the MD and ML of the cylindrical cooling device may be 150-1,000 mm and 300-15,000 mm, respectively.

According to the process of the present invention, the internal pressure of the foamed tubular body extruded from the annular die of the extruder is increased between the annular die and the most upstream section of cylindrical cooling device and also between at least two adjacent sections of the cylindrical cooling device which are divided into at least two sections. This has made it possible to obtain a foamed polyolefin sheet which contains less corrugations compared to those obtained by the conventional process. Further, corrugations can be effectively reduced further by limiting DD/MD and MD/ML to 0.1-1.0 and 0.5-0.02, respectively and/or MD and ML to 150-1,000 mm and 300-15,000 mm, respectively. Corrugations tend to occur especially when a composition comprising 100 parts by weight of low-density polyethylene and 1-40 parts by weight of butane is extruded at an expansion ratio of 2-100 times. However, the process of this invention can effectively prevent occurrence of corrugations in such instances. On the other hand, the apparatus according to this invention include air outlets arranged between the annular die and the most upstream section of cylindrical cooling device and also between at least two adjacent sections of the cylindrical cooling device, respectively, thereby cooling and increasing the internal pressure of the thus-cooled foamed tubular body and hence applying tension to the foamed tubular body at the inner wall. The apparatus therefore permits practice of the process of this invention without failure. When at least one of the sections of the cylindrical cooling device is rendered movable, a desired MD/ML ratio can be chosen. As a result, this has the advantage that said at least one section of the cylindrical cooling device can be placed at a position optimal for the reduction of corrugations depending on the kinds and proportions of the resin and blowing agent employed.

## BRIEF DESCRIPTION OF THE DRAWING

The above and other objects, features and advantages of the present invention will become apparent from the following description of the invention and the appended claims, taken in conjunction with the accompanying sole drawing, which illustrates one embodiment of this invention, namely, which is a partly cutaway schematic side view showing the production of a foamed sheet by a production apparatus according to this invention.

## DETAILED DESCRIPTION OF THE INVENTION AND PREFERRED EMBODIMENT

The term "polyolefin resin" as used herein may include high-density polyethylene, low-density polyethylene, linear low-density polyethylene, polypropylene, polybutene-1, ethylene-propylene copolymers, ethylene-vinyl acetate copolymers containing at least 60 wt.% of the ethylene component, ethylene-styrene graft copolymers, ethylene-vinyl chloride copolymes, etc.

Examples of the blowing agent used in the process of the present invention may include aliphatic hydrocarbons and alicyclic hydrocarbons such as propane, butane, pentane, hexane, cyclobutane and cyclopentane; volatile blowing agents such as halogenated hydrocarbons, e.g., monochlorodifluoromethane, trichlorofluoromethane, dichlorodifluoromethane, dichlorotetrafluoromethane, methyl chloride, ethyl chloride and methylene chloride; decomposable blowing agents such as azodicarbonamide, N.N′-dinitrosopentamethylenetetramine, azobisisobutyronitrile, p,p′-oxybis(benzene sulfonyl hydrazide) and sodium bicarbonate.

The preferred range of the mixing ratio of the polyolefin resin to the blowing agent varies depending on the kinds of the polyolefin resin and blowing agent employed. When low-density polyethylene and butane are used as polyolefin resin and blowing agent respectively by way of example, butane is generally used in an amount of 1-40 parts by weight, preferably 10-30 parts by weight per 100 parts by weight of low-density polyethylene.

According to the process of this invention, a foamable polyolefin resin which has been formed by melting and kneading the polyolefin resin and blowing agent in an extruder is extruded into a low-pressure zone through an annular die provided at an end of the extruder, whereby the foamable polyolefin resin is formed into a foamed tubular body. The foamed tubular body is then brought into contact with a peripheral surface of a cylindrical cooling device divided into at least two sections. The process of the present invention also features that the internal pressure of the foamed tubular body is increased to apply tension to the inner wall of the foamed tubular body between the annular die and the most upstream section of cylindrical cooling device and also between at least two sections of the cylindrical cooling device. As a method for cooling the foamed tubular body and also for increasing the internal pressure of the foamed tubular body, it may be mentioned to feed air into the interior of the foamed tubular body.

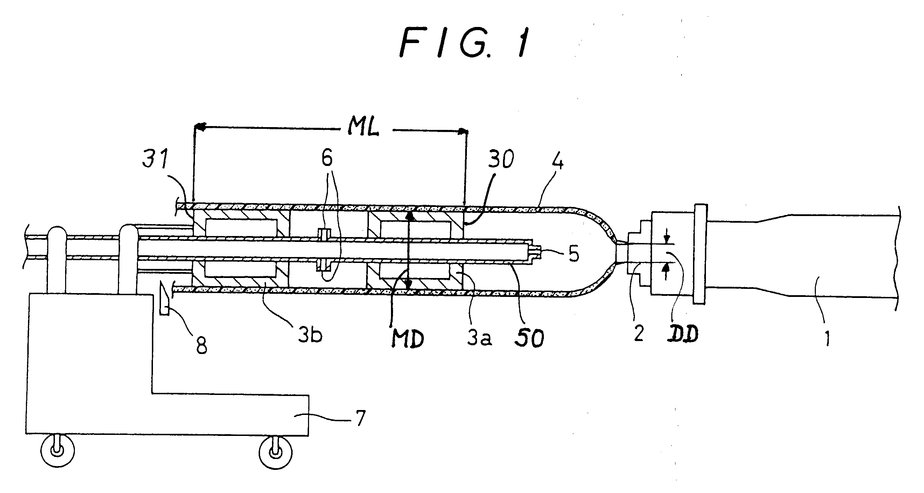

In the present invention, it is preferred to limit the ratio of the ring diameter (DD) of the annular die to the maximum diameter (MD) of the cylindrical cooling device, DD/MD (i.e., blow ratio), to 0.1-1.0 and the

4

ratio of the maximum diameter of the cylindrical cooling device (MD) to the length (ML) from the upstream end (30) of the most upstream section (3a) of the cylindrical cooling device to the downstream end (31) of the most downstream section (3b) of the cylindrical cooling device, MD/ML, to 0.5-0.02 see illustration in FIG 1. It is also preferred to limit the maximum diameter (MD) of the cylindrical cooling device to 150-1,000 mm and the length (ML) from the upstream end of the most upstream section of the cylindrical cooling device to the downstream end of the most downstream section of the cylindrioal cooling device to 300-15,000 mm. When DD, MD and ML are chosen as described above, it is possible to effectively reduce corrugations in foamed sheets to be obtained.

Incidentally, the outer diameter of the cylindrical cooling device is not constant along the entire length thereof. It varies depending the location measured because of the existence of projections and/or raised portions. Therefore, the term "maximum diameter: MD of the cylindrical cooling device" as used herein means the diameter at the largest portion of the cylindrical cooling device.

The foamed tubular body which has been cooled by the cylindrical cooling device is then slit in the direction of extrusion, whereby a sheet having an expansion ratio of generally 2-100 times, preferably 20-60 times is formed.

When a sheet having an expansion ratio in the above range is obtained in this invention, a marked decrease of corrugations can be observed.

An apparatus according to this invention, which is suitable for use in the practice of the process of this invention, is illustrated in FIG. 1. Numeral 1 indicates an extruder equipped an annular die 2 at one end thereof and symbols 3a,3b designate a cylindrical cooling device divided into two sections. Although not shown in the figure, a cooling jacket is arranged on the inner peripheral wall of the cylindrical cooling device. A foamable polyolefin composition charged in the extruder 1 is extruded into a foamed tubular body 4 through the annular die 2 provided said one end of the extruder 1. The foamed tubular body 4 is then successively cooled by the sections 3a,3b of the cylindrical cooling device. Air is fed through an air outlet 5 of an air feed pipe 50, said air outlets 5 being arranged between the annular die 2 and the most upstream section 3a of the cylindrical cooling device, thereby cooling the foamed tubular body and also increasing the internal pressure of the foamed tubular body 4. The air feed pipe 50 has another air outlet 6 which is located between the upstream section 3a and downstream section 3b of the cylindrical cooling device. By the air fed through the air outlet 6, the internal pressure of the foamed tubular body 4 is also increased between the upstream section 3a and downstream section 3b of the cylindrical cooling device and at the same time, the foamed tubular body 4 is also cooled by the air thus fed. As described above, the values of DD/MD and MD/ML should preferably be 0.1-1.0 and 0.5-0.02, respectively. To permit adjustment of the length, ML, for example the downstream section 3b of the cylindrical cooling device is designed to be slidably movable on the air feed pipe 50 by means of a drive means 7 in the apparatus of this invention. As an alternative, the downstream section 3b may be fixed and instead, the upstream section 3a may be arranged movably. Owing to the adoption of this design, the ratio, MD/ML, can be chosen as desired. Incidentally, numeral 8 indicates a cutting blade for slitting the foamed tubular body 4 in the direction of extrusion and hence opening same into a flat sheet.

It is to be noted that a mandrel such as that disclosed in US-A-3,311,681 can also be used in place of the cylindrical cooling device described above. The term "cylindrical cooling device" as used herein should therefore be interpreted in such a broad sense as embracing the mandrel of the above U.S. patent.

The present invention will hereinafter be described more specifically by the following examples.

Example 1:

Added as a blowing agent to low-density polyethylene in an extruder was 21.5 wt.% of butane. The resultant composition was molten and kneaded and then extruded at a discharge rate of 118 kg/hr through an annular die whose DD was 95 mm (DD = 95 mm), whereby a foamed tubular body was formed. Air was fed at a flow velocity of 50 $m^3$/min into the foamed tubular body between the annular die and the most upstream section of the cylindrical cooling device, so that the internal pressure of the foamed tubular body was increased and the tubular body was cooled. Thereafter, the foamed tubular body was cooled by means of a cylindrical cooling device divided into two sections. The MD and ML of the cylindrical cooling device were 350 mm and 3,000 mm, respectively (MD = 350 mm; ML = 3,000 mm). Therefore, the DD/MD and MD/ML were 0.27 and 0.12, respectively (DD/MD = 0.27; MD/ML = 0.12). Air was fed at a flow velocity of 50 $m^3$/min. into the foamed tubular body between the respective sections of the cylindrical cooling device, so that the foamed tubular body was cooled while increasing its internal pressure. The thus-cooled foamed tubular body was then slit open into a flat sheet. Physical properties of the resultant sheet are shown in Table 1.

Comparative Example 1:

Following the procedure of Example 1, the same blowing agent was added in the same amount to the same low-density polyethylene, followed by melting and kneading. The resultant composition was extruded at a discharge rate of 148 kg/hr through an annular die whose DD was 110 mm (DD = 110 mm), thereby forming a foamed tubular body. Without increasing the internal pressure of the foamed tubular body, it was guided to a non-divided cylindrical cooling device whose MD and ML were 390 mm and 1,000 mm, respectively (MD = 390 mm; ML = 1,000 mm). Thereafter, the thus-cooled foamed tubular body was slit open into a generally flat sheet. Physical properties of the resultant sheet are also shown in Table 1.

## Table 1

|  |  | Ex. 1 | Comp. Ex. 1 |
|---|---|---|---|
| Thickness (mm) |  | 1.17 | 1.10 |
| Expansion ratio (times) |  | 37.5 | 37.0 |
| Corrugation value[1] |  | 0.06 | 1.0 |
| Tensile strength (kg/cm$^2$)[2] | Machine | 7.65 | 7.84 |
|  | transverse | 3.80 | 2.72 |
| Elongation (%)[3] | Machine | 94.5 | 79.5 |
|  | transverse | 80.0 | 71.3 |
| Tear strength (kg)[4] | Machine | 0.30 | 0.28 |
|  | transverse | 0.19 | 0.15 |
| Shrinkage factor (%)[5] | Machine | -12.5 | -17.6 |
|  | transverse | -9.6 | -3.8 |
| Stiffness (mm)[6] | Machine | 10 | 10 |
|  | transverse | 50 | 73 |

1) Corrugation value

$$= \frac{\text{Average ridge height of corrugations (mm)}}{\text{Average pitch width of corrugations/2 (mm)}}$$

2) Tensile strength:

   JIS K-6767 was followed.

3) Elongation:

JIS K-6767 was followed.

4) Tear strength:

JIS K-6767 was followed.

5) Shrinkage factor:

The shrinkage factor of each foamed sheet was determined by forming a pair of spaced cuts in the foamed sheet in parallel with each of the machine direction and the direction perpendicular to the machine direction, namely, the transverse direction to obtain a sample of 20 cm x 20 cm, heating the sample for 15 seconds in an oven controlled at 100°C and then measuring the dimensional change in each of the machine and transverse directions.

6) Stiffness:

A 100 mm x 150 mm sample was cut out from each foamed sheet. The stiffness of the foamed sheet was expressed by the degree of sagging of the foamed sheet when the sample was fixed at one of the sides, namely, the height between the fixed side and the opposite side.

**Claims**

1. A process for producing a foamed polyolefin sheet by extruding a molten polyolefin resin, which contains a blowing agent, into a low-pressure zone through an annular die (2) provided at an end of an extruder (1) to form a foamed tubular body (4), passing the foamed tubular body along the peripheral surface of a cylindrical cooling device to cool the foamed tubular body (4) and then slitting the thus-cooled foamed tubular body (4) in the direction of extrusion to open the foamed body, which process is characterized by bringing the foamed tubular body (4) in contact with the peripheral surfaces of at least two sections (3a, 3b) of a cylindrical cooling device received by dividing said cylindrical cooling device and increasing the internal pressure of the foamed tubular body (4) to apply tension to the foamed tubular body (4) at the inner wall by feeding air through air outlets (5, 6) of an air feed pipe (50) between the die (2) and the most upstream section (3a) of the cylindrical cooling device and also between at least two adjacent sections (3a, 3b) of the cylindrical cooling device and thereby cooling the foamed tubular body (4) by the air thus fed.

2. The process as claimed in claim 1, wherein 10-30 parts by weight of butane are used as the blowing agent per 100 parts by weight of low-density polyethylene to provide a foamed polyethylene sheet having an expansion ratio of 20 to 60 times.

3. An apparatus for the production of a foamed polyolefin sheet comprising an extruder (1) with an annular die (2) at an end of the extruder (1) and a cylindrical cooling device for cooling a tubular foamed body (4) formed through the annular die (2) and passing the foamed tubular body (4) along the peripheral surface of the cooling device, and means for slitting the cooled tubular foamed body (4) in the direction of extrusion to open the same, which apparatus is characterized by at least two sections (3a, 3b) of a cylindrical cooling device received by dividing said cylindrical cooling device and an air feed pipe (50) having air outlets (5) arranged between the annular die (2) and the most upstream section (3a) of the cylindrical cooling device and air outlets (6) between at least two adjacent sections (3a, 3b) of the cylindrical cooling device, for feeding air through the air outlets (5, 6) thereby increasing the internal pressure of the thus-cooled foamed tubular body (4) and applying tension to the foamed tubular body (4) at inner wall thereof and cooling the foamed tubular body (4).

4. The apparatus as claimed in claim 3, wherein at least one of said at least two sections (3a, 3b) of the cylindrical cooling device is movable for adjustment of the length ML, the length from the upstream end (30) of the most upstream section (3a) of the cylindrical cooling device to the downstream end (31) of the most downstream section (3b) of the cylindrical cooling device.

5. The apparatus as claimed in claim 3, wherein the die and the cylindrical cooling device satisfy the following equations:

DD/MD = 0.1-1.0 and
MD/ML = 0.5-0.02

wherein DD is a ring diameter of the annular die (2), MD the maximum diameter of the cylindrical cooling device (3a, 3b) and ML the length from the upstream end (30) of the most upstream section (3a) of the cylindrical cooling device to the downstream end (31) of the most downstream section (3b) of the cylindrical cooling device, all expressed in terms of mm.

6. The apparatus as claimed in claim 5, wherein the MD and ML of the cylindrical cooling device are 150-1,000 mm and 300-15,000 mm, respectively.

7. The apparatus as claimed in claim 4, wherein the downstream section (3b) of the cylindrical cooling device is designed to be slidably movable on the air feed pipe (50) by drive means (7).

8. The apparatus as claimed in claim 4, wherein the upstream section (3a) of the cylindrical cooling device is arranged movably and the downstream section (3b) is fixed.

**Patentansprüche**

1. Verfahren zum Herstellen einer geschäumten Polyolefinfolie mittels Extrudieren eines geschmolzenen Polyolefines, das ein Treibmittel enthält, in eine Niederdruckzone durch eine ringförmige Düse (2), die am Ende eines Extruders (1) vorgesehen ist, um einen geschäumten rohrförmigen Körper (4) zu bilden, Führen des geschäumten rohrförmigen Körpers entlang der peripheren Oberfläche einer zylindrischen Kühlvorrichtung, um den geschäumten rohrförmigen Körper zu kühlen und dann den so gekühlten geschäumten rohrförmigen Körper (4) in Extrusionsrichtung aufzuschlitzen, um den geschäumten Körper zu öffnen, wobei dieses Verfahren dadurch gekennzeichnet ist, daß der geschäumte rohrförmige Körper (4) in Kontakt mit der peripheren Oberfläche von mindestens zwei Sektionen (3a,3b) einer zylindrischen Kühlvorrichtung, erhalten durch Teilen dieser zylindrischen Kühlvorrichtung, gebracht wird und der Innendruck des geschäumten rohrförmigen Körpers (4) durch Zuführen von Luft durch Luftaustrittsöffnungen (5,6) eines Luftzuführungsrohres (50) zwischen der Düse (2) und der am meisten strömungsaufwärts gelegenen Sektion (3a) der zylindrischen Kühlvorrichtung und auch zwischen zumindest zwei benachbarten Sektionen (3a, 3b) der zylindrischen Kühlvorrichtung erhöht wird, um dem geschäumten rohrförmigen Körper (4) an der Innenwandung Druck zu applizieren und dabei den geschäumten rohrförmigen Körper (4) mittels der dadurch zugeführten Luft zu kühlen.

2. Verfahren nach Anspruch 1,
bei dem 10 bis 30 Gewichts-Teile Butan als Treibmittel auf 100 Gewichts-Teile LD-Polyethylen verwendet werden, um eine geschäumte Polyehtylenfolie eines Expansionsverhältnisses von 20 bis 60 zu erhalten.

3. Vorrichtung zum Herstellen einer geschäumten Polyolefinfolie, enthaltend einen Extruder (1) mit einer ringförmigen Düse (2) an einem Ende des Extruders (1) und einer zylindrischen Kühlvorrichtung zum Kühlen eines rohrförmigen geschäumten Körpers (4), der durch die ringförmige Düse (2) gebildet wird und wobei der geschäumte rohrförmige Körper (4) entlang der peripheren Oberfläche der Kühlvorrichtung gekühlt wird und Mittel zum Schlitzen des gekühlten rohrförmigen geschäumten Körpers (4) in Extrusionsrichtung zum Öffnen desselben, wobei diese Vorrichtung gekennzeichnet ist durch mindestens zwei Sektionen (3a, 3b) einer zylindrischen Kühlvorrichtung, erhalten durch Teilen dieser zylindrischen Kühlvorrichtung und durch ein Luftzuführungsrohr (50) mit Luftaustrittsöffnungen (5), angeordnet zwischen der ringförmigen Düse (2) und der am meisten stromaufwärts gelegenen Sektion (3a) der zylindrischen Kühlvorrichtung und Luftaustrittsöffnungen (6) zwischen mindestens zwei benachbarten Sektionen (3a, 3b) der zylindrischen Kühlvorrichtung, um Luft durch die Luftaustrittsöffnungen (5,6) einzuführen, wodurch der Innendruck des so gekühlten geschäumten rohrförmigen Körpers (4) erhöht wird und Druck auf die Innenwandung des geschäumten rohrförmigen Körpers (4) appliziert wird und der geschäumte rohrförmige Körper (4) gekühlt wird.

4. Vorrichtung nach Anspruch 3,
bei der zumindest eine der mindestens zwei Sektionen (3a, 3b) der zylindrischen Kühlvorrichtung bewegbar zum Einstellen der Länge (ML) ist, das ist die Länge vom stromaufwärtigen Ende (30) der am meisten stromaufwärts gelegenen Sektion (3a) der zylindrischen Kühlvorrichtung zum stromabwärtigen Ende (31), der am meisten stromabwärts gelegenen Sektion (3b) der zylindrischen Kühlvorrichtung.

5. Vorrichtung nach Anspruch 3,
bei der die Düse und die zylindrische Kühlvorrichtung folgenden Verhältnissen genügen:;

DD/MD = 0.1-1.0 und
MD/ML = 0.5-0.02,

wobei DD ein Ringdurchmesser der ringförmigen Düse (2), MD der maximale Durchmesser der zylindrischen Kühlvorrichtung (3a, 3b) und ML die Länge vom stromaufwärtigen Ende (30) der am meisten stromaufwärts gelegenen Sektion (3a) der zylindrischen Kühlvorrichtung bis zum stromabwärtigen Ende (31) der am meisten stromabwärts gelegenen Sektion (3b) der zylindrischen Kühlvorrichtung ist, alle Angaben in mm.

6. Vorrichtung nach Anspruch 5,
bei der MD und ML der zylindrischen Kühlvorrichtung 150 bis 1000 mm bzw. 300 bis 15.000 mm sind.

7. Vorrichtung nach Anspruch 4,
bei der die stromabwärts gelegene Sektion (3b) der zylindrischen Kühlvorrichtung verschiebbar auf dem Luftzuführungsrohr (50) mittels eines Antriebes (7) ausgebildet ist.

8. Vorrichtung nach Anspruch 4,
bei der die stromaufwärts gelegene Sektion (3a) der zylindrischen Kühlvorrichtung bewegbar und die stromabwärts gelegene Sektion (3b) fest eingebaut ist.

**Revendications**

1. Procédé permettant de produire une feuille en mousse de polyoléfine par extrusion d'une résine de polyoléfine fondue, résine qui contient un agent porogène, pour l'envoyer dans une région à basse pression par l'intermédiaire d'une filière annulaire (2) placée en une extrémité d'une extrudeuse (1) afin de former un corps tubulaire expansé (4), passage du corps tubulaire expansé le long de la surface périphérique d'un dispositif cylindrique de refroidissement afin de faire refroidir ce corps tubulaire expansé (4), puis fente du corps tubulaire expansé (4) ainsi refroidi dans la direction de l'extrusion afin d'ouvrir le corps tubulaire,

ledit procédé étant caractérisé par le fait d'amener le corps tubulaire expansé (4) en contact avec les surfaces périphériques d'au moins deux tronçons (3a, 3b) d'un dispositif cylindrique de refroidissement obtenus par division dudit dispositif cylindrique de refroidissement et le fait d'augmenter la pression intérieure du corps tubulaire expansé (4) afin d'appliquer une tension au corps tubulaire expansé (4), au niveau de sa paroi intérieure, par envoi d'air par des orifices de sortie d'air (5, 6) placés dans une canalisation (50) d'alimentation en air entre la filière (2) et le tronçon amont (3a) du dispositif cylindrique de refroidissement et également entre au moins deux tronçons adjacents (3a, 3b) du dispositif cylindrique de refroidissement, et refroidir de ce fait le corps tubulaire expansé (4) grâce à l'air ainsi envoyé.

2. Procédé selon la revendication 1, dans lequel 10 à 30 parties en poids de butane sont utilisées comme agent porogène pour 100 parties en poids de polyéthylène basse densité afin de donner une feuille de mousse de polyéthylène ayant un taux d'expansion qui vaut de 20 à 60.

3. Appareil permettant de produire une feuille en mousse de polyoléfine, qui comprend une extrudeuse (1) avec une filière annulaire (2) en une extrémité de l'extrudeuse et un dispositif cylindrique de refroidissement destiné à refroidir un corps tubulaire expansé (4) formé par l'intermédiaire de la filière annulaire (2) et qui fait passer le corps tubulaire expansé (4) le long de la surface périphérique du dispositif de refroidissement, et un moyen pour fendre le corps tubulaire expansé (4) dans la direction de l'extrusion afin d'ouvrir ce corps, ledit appareil étant caractérisé par au moins deux tronçons (3a, 3b) d'un dispositif cylindrique de refroidissement obtenus par division dudit dispositif cylindrique de refroidissement et une canalisation (50) d'alimentation en air comportant des orifices de sortie d'air (5) placés entre la filière annulaire (2) et le tronçon le plus amont (3a) du dispositif cylindrique de refroidissement ainsi que des orifices de sortie d'air (6) placés entre au moins deux tronçons adjacents (3a, 3b) du dispositif cylindrique de refroidissement, pour envoyer de l'air par les orifices de sortie d'air (5, 6) et augmenter de ce fait la pression intérieure du corps tubulaire expansé (4) ainsi refroidi et pour appliquer une tension au corps tubulaire expansé (4), au niveau de sa paroi intérieure, et refroidir le corps tubulaire expansé (4).

4. Appareil selon la revendication 3, dans lequel l'un au moins des tronçons (3a, 3b) au nombre d'au moins deux du dispositif cylindrique de refroidissement peut être déplacé pour un réglage de la longueur ML, longueur comprise entre l'extrémité amont (30) du tronçon le plus en amont (3a) du dispositif cylindrique de refroidissement et l'extrémité aval (31) du tronçon le plus en aval (3b) du dispositif cylindrique de refroidissement.

5. Appareil selon la revendication 3, dans lequel la filière et le dispositif cylindrique de refroidissement satisfont aux équations suivantes :

DD/MD = 0,1 - 1,0 et
MD/ML = 0,5 - 0,02

sachant que DD est le diamètre d'anneau de la filière annulaire (2), MD le diamètre maximal du dispositif cylindrique de refroidissement (3a, 3b) et ML la longueur entre l'extrémité amont (30) du tronçon le plus en amont (3a) du dispositif cylindrique de refroidissement et l'extrémité aval (31) du tronçon le plus en aval (3b) du dispositif cylindrique de refroidissement, tous ces termes étant exprimés en mm.

6. Appareil selon la revendication 5, dans lequel les valeurs MD et ML du dispositif cylindrique de refroidissement valent respectivement de 150 à 1000 mm et de 300 à 15 000 mm.

7. Appareil selon la revendication 4, dans lequel le tronçon aval (3b) du dispositif cylindrique de refroidissement est conçu pour pouvoir être déplacé de façon coulissante sur la canalisation (30) d'alimentation en air par un moyen d'entraînement (7).

8. Appareil selon la revendication 4, dans lequel le tronçon amont (3a) du dispositif cylindrique de refroidissement est disposé pour être mobile et le tronçon aval (3b) est fixe.

# F I G. 1

EP 0 368 302 B1